(19)

Europäisches Patentamt

European Patent Office

Office européen des brevets

(11) **EP 4 358 439 A1**

(12) **EUROPEAN PATENT APPLICATION**
published in accordance with Art. 153(4) EPC

(43) Date of publication:
**24.04.2024 Bulletin 2024/17**

(21) Application number: **22864859.8**

(22) Date of filing: **11.07.2022**

(51) International Patent Classification (IPC):
**H04B 17/309** (2015.01)  **H04B 17/26** (2015.01)
**H04B 7/06** (2006.01)

(52) Cooperative Patent Classification (CPC):
**H04B 7/06; H04B 17/26; H04B 17/309**

(86) International application number:
**PCT/KR2022/010052**

(87) International publication number:
**WO 2023/033350 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021 KR 20210115870**

(71) Applicant: **Samsung Electronics Co., Ltd.
Suwon-si, Gyeonggi-do 16677 (KR)**

(72) Inventors:
• **JEONG, Heeseok
Suwon-si Gyeonggi-do 16677 (KR)**
• **YOON, Eungsik
Suwon-si Gyeonggi-do 16677 (KR)**
• **CHO, Kyuhyun
Suwon-si Gyeonggi-do 16677 (KR)**

(74) Representative: **Appleyard Lees IP LLP
15 Clare Road
Halifax HX1 2HY (GB)**

(54) **ELECTRONIC DEVICE AND OPERATING METHOD THEREOF**

(57)    An electronic device and an operating method thereof are disclosed. The disclosed electronic device comprises: a memory including at least one executable instruction; and a processor for executing the at least one instruction stored in the memory, wherein the processor can acquire multi-pass channel state property information on the basis of a wireless signal received from an access point (AP) communicating with the electronic device, calculate signal similarity by specific section on the basis of the multi-pass channel state property information, and determine, on the basis of a pattern of signal similarity by specific section, whether motion detection based on the multi-pass channel state property information is available.

FIG. 1

EP 4 358 439 A1

**Description**

Technical Field

The following description relates to an electronic device and an operating method thereof.

Background Art

The development of information and communication technology is enabling electronic devices to offer a wide range of services. For example, an electronic device may use multipath channel state property information of a wireless signal received from an access point (AP) to determine whether motion occurs in a space through which the wireless signal is transmitted and perform a subsequent operation according to a result of the determination.

Disclosure of the Invention

Technical Solutions

With the diverse advancements in technology related to access points (APs), the types and forms of multipath channel state property information transmitted by these APs have become varied, so it may be challenging to uniformly determine whether motion occurs based on the multipath channel state property information.
According to various embodiments described herein, by determining and analyzing a pattern of signal similarity for each predetermined section based on multipath channel state property information of a wireless signal received from an AP and determining whether motion detection based on the multipath channel state property information is available, it may be possible to effectively identify an AP where motion detection is unavailable.
Furthermore, according to various embodiments, by determining whether the multipath channel state property information transmitted from an AP 110 may be applied to detection of motion of a user 120, unnecessary errors in a subsequent operation may be prevented in advance, effectively improving the accuracy and stability of a service.
According to an embodiment, an electronic device includes a memory including at least one executable instruction and a processor for executing the at least one instruction stored in the memory, wherein the processor may be configured to acquire multipath channel state property information based on a wireless signal received from an AP communicating with the electronic device, calculate signal similarity for each predetermined section based on the multipath channel state property information, and determine, based on a pattern of the signal similarity for each predetermined section, whether motion detection based on the multipath channel state property information is available.
According to an embodiment, an operating method of an electronic device includes acquiring multipath channel state property information based on a wireless signal received from an AP communicating with the electronic device and determining whether motion detection based on the multipath channel state property information is available based on a determination of whether a pattern of signal similarity for each predetermined section determined based on the multipath channel state property information is caused by motion of the user.

Effects

According to various embodiments, by analyzing a pattern of signal similarity for each predetermined section determined based on multipath channel state property information received from an access point (AP), it may be possible to determine whether motion detection based on the multipath channel state property information is available. Accordingly, it may be possible to effectively identify an AP where motion detection is unavailable.
Furthermore, according to various embodiments, by determining whether the multipath channel state property information transmitted from an AP 110 may be applied to detection of motion of a user 120, unnecessary errors in a subsequent operation may be prevented in advance, effectively improving the accuracy and stability of a service.
In addition, various effects directly or indirectly ascertained through the disclosure may be provided.

Brief Description of Drawings

FIG. 1 is a diagram illustrating an operation of an electronic device that detects motion of a user based on multipath channel state property information received from an access point (AP), according to an embodiment.
FIG. 2 is a diagram illustrating an operation of determining signal similarity for each predetermined section based on multipath channel state property information, according to an embodiment.

FIG. 3 is a diagram illustrating general signal similarity for each predetermined section, according to an embodiment.

FIG. 4 is a diagram illustrating signal similarity for each predetermined section when motion detection is available, according to an embodiment.

FIG. 5 is a diagram illustrating signal similarity for each predetermined section when motion detection is unavailable, according to an embodiment.

FIGS. 6 and 7 are diagrams illustrating an operation of determining whether motion detection is available based on an AP output adjustment time point and a window length of signal similarity for each predetermined section, according to an embodiment.

FIG. 8 is a block diagram of an electronic device according to an embodiment.

FIG. 9 is a detailed block diagram of an electronic device according to an embodiment.

FIG. 10 is a block diagram of a mobile device according to an embodiment.

FIG. 11 is a diagram illustrating an operating method of an electronic device according to an embodiment.

Best Mode for Carrying Out the Invention

Hereinafter, embodiments are described in detail with reference to the accompanying drawings. When describing the embodiments with reference to the accompanying drawings, like reference numerals refer to like elements and a repeated description related thereto is omitted.

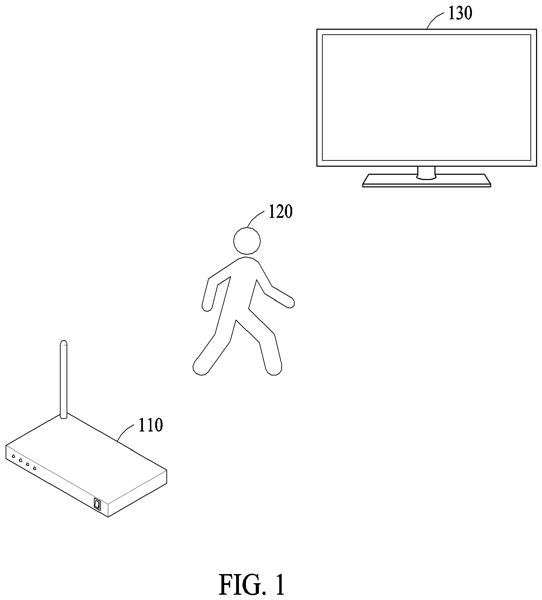

FIG. 1 is a diagram illustrating an operation of an electronic device that detects motion of a user based on multipath channel state property information received from an access point (AP), according to an embodiment.

Referring to FIG. 1, illustrated are an access point (AP) 110, a user 120, and an electronic device 130.

The AP 110 may be a device that connects the electronic device 130 to a network using wireless communication (e.g., wireless fidelity (Wi-Fi)). While communicating with the electronic device 130, the AP 110 may transmit a wireless signal to the electronic device 130. The electronic device 130 may acquire multipath channel state property information based on the wireless signal received from the AP. The multipath channel state property information is state information about a communication channel, may represent, for example, a channel frequency response property for each orthogonal frequency-division multiplexing (OFDM) subcarrier, and may include information about modification such as attenuation, diffraction, and reflection of a signal between a transmitter and a receiver. For example, the multipath channel state property information may include channel state information (CSI). The multipath channel state property information may include a random value unrelated to data to be transmitted, and the random value may change when motion of an object (e.g., the user 120) occurs in a space through which the wireless signal is transmitted. It may be determined that whether the motion of the object occurs in the space through which the wireless signal is transmitted using the characteristics of the multipath channel state property information. The multipath channel state property information may be transmitted together when at least one of a request, a response, and data is transmitted between the AP 110 and the electronic device 130.

The electronic device 130 is a device that performs wireless communication with the AP 110 and may be one of a mobile phone, a smartphone, a personal digital assistant (PDA), a netbook, a tablet computer, a laptop computer, a mobile device, a smartwatch, a smart band, smart glasses, a wearable device, a desktop, a computing device, a television (TV), a set-top box, a refrigerator, a home appliance, a door lock, or a security device. However, embodiments of the electronic device 130 are not limited thereto, and the description of the present disclosure may apply to other devices without limitation. Hereinafter, for ease of description, an example in which the electronic device 130 is a TV is described.

The electronic device 130 may determine whether the motion of the object occurs based on the multipath channel state property information received from the AP 110. For example, while a motion event such as an event in which the user 120 enters the space through which the wireless signal is transmitted, sits on a chair, moves their arm, or moves their mouth to speak occurs, the multipath channel state property information acquired by the electronic device 130 may be the same or similar values rather than a random value. However, the motion event is not limited to the examples above. Using these characteristics, the electronic device 130 may switch to an off mode or a power-saving mode when motion of the user 120 is not detected for more than a predetermined period of time. Alternatively, the electronic device 130 may switch from the off mode or power-saving mode to an on mode when the motion of the user 120 is not detected until a predetermined time point, after which the motion of the user 120 is continuously detected. In this way, the electronic device 130 may determine whether the motion of the object occurs based on the multipath channel state property information received from the AP 110, perform a subsequent operation based on a result of the determination, and provide a service customized to the user 120.

However, depending on some characteristics of the AP 110, motion detection based on the multipath channel state property information transmitted from the AP 110 may be unavailable. In this case, when the electronic device 130 determines whether the motion of the object occurs based on the multipath channel state property information and performs a subsequent operation, an operation that is not suitable for a situation may be performed. Therefore, it may have to be determined whether motion detection based on the multipath channel state property information transmitted from the AP 110 is available, as described in detail below.

The electronic device 130 may include a multipath channel state property information receiver, a multipath channel state property information preprocessing part, a signal similarity for each predetermined section calculator, and an unusable AP determiner. Here, the multipath channel state property information preprocessing part, the signal similarity for each predetermined section calculator, and the unusable AP determiner may be implemented with one or more processors included in the electronic device 130.

The multipath channel state property information receiver may receive multipath channel state property information while performing wireless communication with the AP 110.

The multipath channel state property information preprocessing part may preprocess the received multipath channel state property information. For example, the multipath channel state property information preprocessing part may stop transmitting a signal that is changed excessively in magnitude compared to predetermined criteria through a Hampel filter and amplify a change in the multipath channel state property information due to the motion of the user 120 using principal component analysis (PCA).

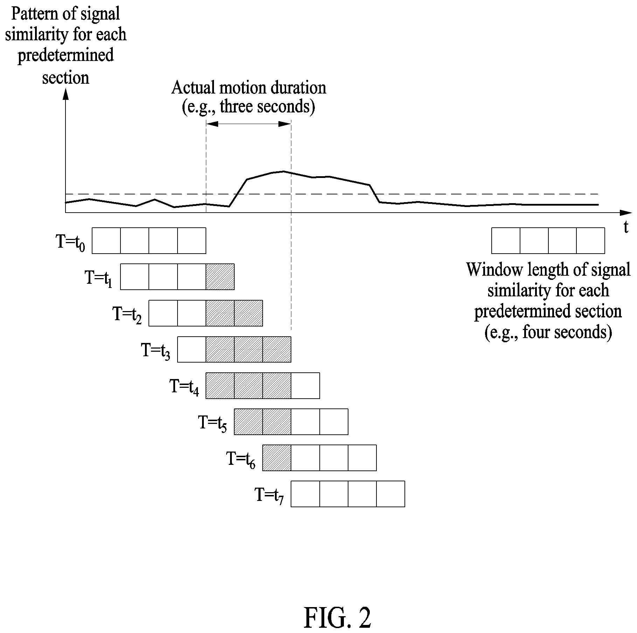

The signal similarity for each predetermined section calculator may calculate signal similarity for each predetermined section at each sampling time point by applying an autocorrelation function (ACF) to multipath channel state property information received during a predetermined window length. As described above, in a state in which there is no motion of the object, the multipath channel state property information includes random values that are independent of each other, so the signal similarity for each predetermined section may have a value of 0 or a value close to 0. On the other hand, in a state in which there is motion of the object, the multipath channel state property information includes quite similar values, so the signal similarity for each predetermined section may have a value of 1 or a value close to 1. Using these characteristics of the signal similarity for each predetermined section, it may be determined whether there is motion of the object in the space through which the wireless signal is transmitted. The signal similarity for each predetermined section calculator may determine a change in the signal similarity for each predetermined section over time by calculating the signal similarity for each predetermined section at each sampling time point by applying a predetermined window length to the multipath channel state property information. An operation of determining a pattern of the signal similarity for each predetermined section by calculating the signal similarity for each predetermined section at each sampling time point is described in detail with reference to FIG. 2. For example, the signal similarity for each predetermined section may include an ACF.

The unusable AP determiner may determine whether the multipath channel state property information transmitted from the AP 110 may be applied to detection of the motion of the user 120 by analyzing the pattern of the signal similarity for each predetermined section. The determination of whether the multipath channel state property information may be applied to motion detection is described in detail with reference to the following drawings.

By determining whether the multipath channel state property information transmitted from the AP 110 may be applied to detection of the motion of the user 120, unnecessary errors in a subsequent operation may be prevented in advance, effectively improving the accuracy and stability of a service.

FIG. 2 is a diagram illustrating an operation of determining signal similarity for each predetermined section based on multipath channel state property information, according to an embodiment.

Referring to FIG. 2 an example is illustrated to describe an operation of determining signal similarity for each predetermined section when a user quickly stands up from a chair and then sits down within three seconds. In the example of FIG. 2, motion of the user occurs from $t_4$ to $t_6$ and multipath channel state property information with the same or similar values received between $t_4$ and $t_6$ may be represented by blocks marked with diagonal lines at the bottom of FIG. 2.

An electronic device may calculate signal similarity for each predetermined section at each sampling time point by applying an ACF to multipath channel state property information received during a predetermined window length (e.g., four seconds). For example, when calculating the signal similarity for each predetermined section, the electronic device uses samples (e.g., window length of four seconds x the number of times of sampling per second 33 = 132 in total) of previous multipath channel state property information corresponding to the window length, and thus, even when motion disappears, the signal similarity for each predetermined section may not immediately decrease to the lowest value (e.g., 0).

For example, the signal similarity for each predetermined section determined at $t_0$ may be calculated based on multipath channel state property information received between $t_{-3}$ and $t_0$. Since there is no motion of the user between $t_{-3}$ and $t_0$, multipath channel state property information with independent and random values is received, the signal similarity for each predetermined section may have a value smaller than a predetermined threshold (indicated by a dashed line parallel to the x-axis in the graph of signal similarity for each predetermined section of FIG. 2). However, the signal similarity for each predetermined section between $t_{-1}$ and $t_2$ is calculated based in part on the multipath channel state property information with the same or similar values and may thus have a value higher than the threshold. There may be a characteristic that a section in which signal similarity for each predetermined section has a value greater than the threshold is longer than a section in which the user actually moves.

Therefore, when motion occurs for however short the duration, there is a minimum length in a section in which the signal similarity for each predetermined section has a value greater than the threshold and the minimum length may be longer than a window length of the signal similarity for each predetermined section.

In addition, there may be a minimum duration (e.g., three seconds) of the motion of the user. A section in which the signal similarity for each predetermined section has a value greater than the threshold may use a characteristic longer than the minimum duration and determine that a pattern of the signal similarity for each predetermined section is not caused by the motion of the user when a section in which the signal similarity for each predetermined section has a value greater than the threshold is shorter than the previously described minimum duration. In this case, it may be determined that motion detection based on corresponding multipath channel state property information is unavailable.

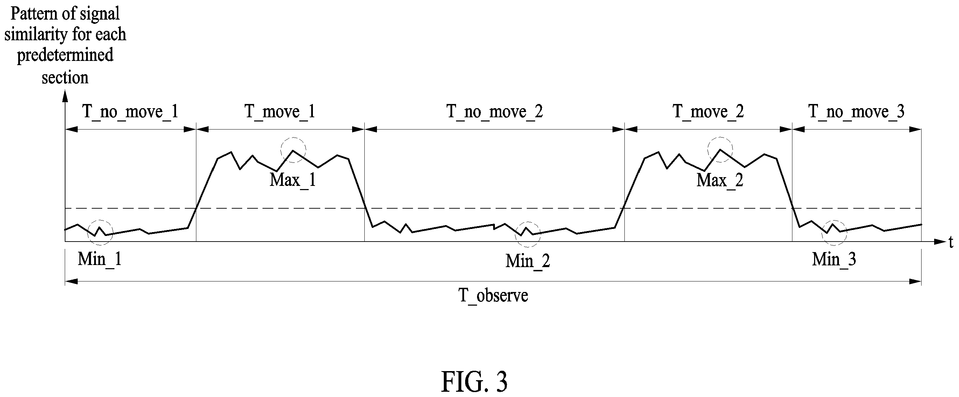

FIG. 3 is a diagram illustrating general signal similarity for each predetermined section, according to an embodiment.

Referring to FIG. 3, illustrated is an example of a pattern of signal similarity for each predetermined section when normal motion detection is available based on multipath channel state property information. When normal motion detection is available, it may be determined that motion of a user occurs in a section (e.g., T_move_1 or T_move_2) that exceeds a predetermined threshold (indicated by a dashed line parallel to the x-axis in the graph of signal similarity for each predetermined section of FIG. 3).

In the graph of FIG. 3, T_observe may represent the total length of a section for observing signal similarity for each predetermined section to determine whether motion detection is available, T_move_i may represent the length of an i-th section determined as a section in which motion occurs, T_move_total may represent the total length of a section determined as a section in which motion occurs, N may represent the number of sections determined as sections in which a motion occurs, and Max_i may represent a maximum value of signal similarity for each predetermined section in the i-th section determined as a section in which motion occurs. In addition, T_no_move_j may represent the length of a j-th section determined as a section in which no motion occurs, M may represent the number of sections determined as sections in which no motion occurs, and Min_j may represent the minimum value of signal similarity for each predetermined section in the j-th section determined as a section in which no motion occurs. The unit of section length may be, for example, seconds but is not limited to the foregoing examples.

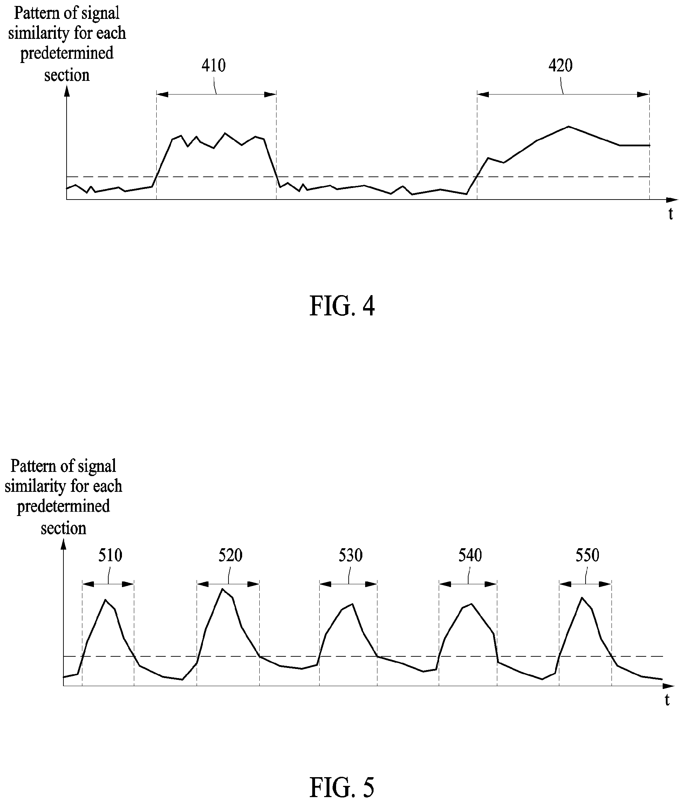

FIG. 4 is a diagram illustrating signal similarity for each predetermined section when motion detection is available, according to an embodiment.

Referring to FIG. 4, an example of a pattern of signal similarity for each predetermined section based on actual motion of a user is illustrated. In the example of FIG. 4, as signal similarity for each predetermined section has a value greater than a threshold in a first section 410 and a second section 420, it may be determined that motion of the user occurs in these sections. It may be identified that the shapes of the signal similarity for each predetermined section observed in the first section 410 and the second section 420 are different from each other, that the length of the first section 410 and the length of the second section 420 are different from each other, and that periodicity of a motion occurrence time point is low. The electronic device may determine whether the motion of the user occurs by comprehensively considering the pattern of the signal similarity for each predetermined section based on at least one of a waveform, a section length, or periodicity.

When a section that is greater than or equal to the threshold and a section that is less than the threshold are continuously repeated with periodicity and the periodicity differs from periodicity caused by the general motion of the user, the electronic device may determine that motion detection based on corresponding multipath channel state property information is unavailable, and the description thereof is provided in detail with reference to FIG. 5.

FIG. 5 is a diagram illustrating signal similarity for each predetermined section when motion detection is unavailable, according to an embodiment.

Referring to FIG. 5, illustrated is an example of signal similarity for each predetermined section when motion detection based on multipath channel state property information is unavailable due to the absence or weak presence of a characteristic in which the multipath channel state property information has random values that are independent of each other when there is no motion of a user and has the same or similar values when there is motion of the user. The signal similarity for each predetermined section may have a preset length for observation to determine whether motion detection is available.

In the signal similarity for each predetermined section illustrated as an example in FIG. 5, similar waveforms may appear repeatedly at regular intervals in sections 510 to 550 that are greater than or equal to a predetermined threshold regardless of the presence or absence of motion. For example, the signal similarity for each predetermined section, as illustrated in FIG. 5, may occur when there are periodic increases in signal similarity for each predetermined section that measures the similarity of the multipath channel state property information due to a deliberate or enforced change made to the multipath channel state property information to enhance the performance (e.g., Wi-Fi transmission efficiency) of an AP and the duration of each section is similar and/or when the reflection of a wireless signal easily occurs in the environment in which the multipath channel state property information propagates.

The electronic device may determine whether motion detection based on the multipath channel state property information is available based on the difference between the length of one of the sections 510 to 550 that remains greater than or equal to the predetermined threshold in the signal similarity for each predetermined section and the average length of the sections 510 to 550. For example, the electronic device may determine that motion detection is unavailable when Equation 1 below is satisfied.

【Equation 1】
$$|T\_move\_i - T\_move\_average| \, / \, T\_move\_average < alpha\_i$$

In Equation 1 above, $T\_move\_average$ may represent the average length of the sections 510 to 550 in which a motion occurs and $alpha\_i$ may be a second threshold set to determine whether motion detection is available. For example, alpha i may vary depending on a wireless environment including one or more of the structures of a space through which a wireless signal is transmitted, the material of the space, and the location of the AP and the type of motion.

When, similar to the signal similarity for each predetermined section illustrated as an example in FIG. 5, similar waveforms occur in the sections 510 to 550 that are greater than or equal to the predetermined threshold regardless of the absence or presence of motion, T move i and T move_average have similar values and $|T\_move\_i - T\_move\_average|$ has a value of 0 or a value close to 0, and thus, the right-hand side of Equation 1 may have a value of 0 or a value even closer to 0. In this case, the right-hand side of Equation 1 has a value less than alpha i, thereby satisfying Equation 1, and the electronic device may determine that motion detection based on corresponding multipath channel state property information is unavailable. On the other hand, in the case of signal similarity for each predetermined section when motion detection is available illustrated as an example in FIG. 4, there is a high probability that $T\_move\_i$ and $T\_move\_average$ have relatively different values and the right-hand side of Equation 1 has a value greater than or equal to $alpha\_i$, so Equation 1 is not satisfied and the electronic device may determine that motion detection based on corresponding multipath channel state property information is available.

The electronic device may determine that motion detection based on the multipath channel state property information is unavailable in response to a value based on the difference between the length of one of the sections 510 to 550 that remains greater than or equal to the threshold predetermined in the signal similarity for each predetermined section according to Equation 1 and the average length of the sections 510 to 550 being less than the second threshold. Furthermore, the electronic device may determine whether motion detection is available based on the similarity between patterns of the sections 510 to 550 that remain greater than or equal to the threshold predetermined in the signal similarity for each predetermined section, even when not following Equation 1. For example, when the similarity between the patterns of the sections 510 to 550 meets a predetermined condition, the electronic device may determine that motion detection is unavailable.

In addition, the electronic device may determine whether motion detection is available based on whether the length of one of the sections 510 to 550 that remain greater than or equal to the threshold predetermined in the signal similarity for each predetermined section is less than the third threshold, and such a condition may be expressed by Equation 2 below.

【Equation 2】
$$T\_move\_i < T\_move\_critical$$

In Equation 2 above, $T\_move\_critical$ may represent the third threshold corresponding to the minimum length of a section in which the signal similarity for each predetermined section remains greater than or equal to the predetermined threshold when actual motion occurs and may vary depending on a wireless environment including one or more of the structures of the space through which a wireless signal is transmitted, the material of the space, and the location of the AP.

Previous multipath channel state property information corresponding to a window length is used when the signal similarity for each predetermined section is calculated, and thus, the third threshold may be greater than the window length applied to a calculation of the signal similarity for each predetermined section based on a characteristic that the signal similarity for each predetermined section does not immediately reduce to a minimum value even when motion disappears. Moreover, in everyday life, motion performed by the user has a predetermined amount of motion duration or minimum motion time, and therefore, the third threshold may be greater than the motion duration or minimum motion time. Motion of the user in everyday life may include, for example, entering/leaving a space, standing/sitting, or moving from one to another location, but embodiments are not limited thereto. In addition, as the occurrence of motion influences the multipath channel state property information, the third threshold may be determined based on a minimum detection time observed in the signal similarity for each predetermined section. Summarizing the above-described three factors that influence the third threshold, the third threshold may be determined as "window length of signal similarity for each predetermined section + minimum motion time - minimum detection time".

Therefore, in the case of normal signal similarity for each predetermined section caused by the motion of the user, the electronic device may determine whether motion detection based on the multipath channel state property information is available using a characteristic that T_move_i has a length longer than T_move_critical. For example, while the electronic device may determine that motion detection is unavailable when Equation 2 is satisfied, the electronic device may determine that motion detection is available when Equation 2 is not satisfied.

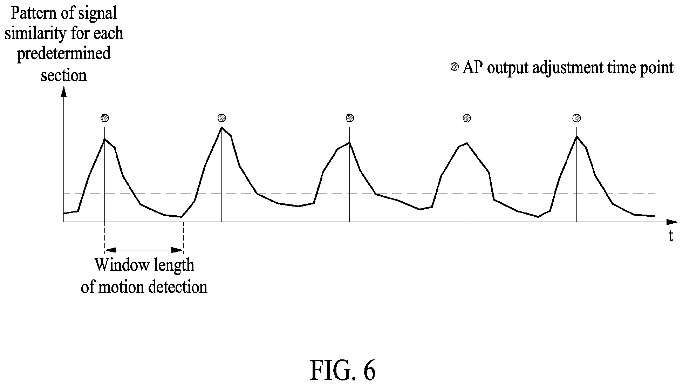

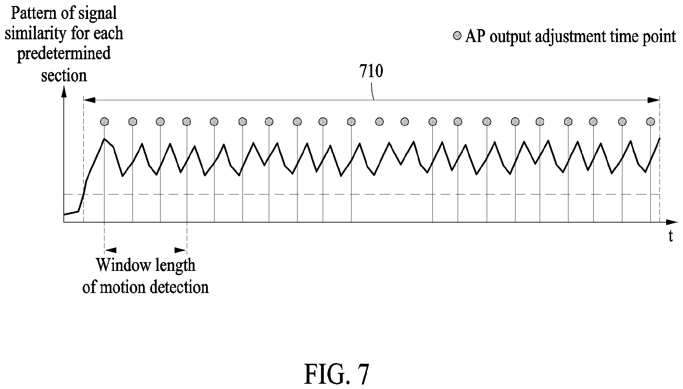

FIGS. 6 and 7 are diagrams illustrating an operation of determining whether motion detection is available based on an AP output adjustment time point and a window length of signal similarity for each predetermined section, according to an embodiment.

Referring to FIG. 6, illustrated is an example of signal similarity for each predetermined section when an output adjustment period of an AP is longer than a window length (e.g., the window length of signal similarity for each predetermined section of FIG. 2) for motion detection. The signal similarity for each predetermined section at the output adjustment time point of the AP may be greater than a predetermined threshold, but the signal similarity for each predetermined section gradually decreases over time. Thus, a section in which the signal similarity for each predetermined section is greater than the predetermined threshold and a section in which the signal similarity for each predetermined section is less than the predetermined threshold may alternate when the output adjustment period is longer than the window length.

Referring to FIG. 7, illustrated is an example of signal similarity for each predetermined section when an output adjustment period of an AP is shorter than a window length for motion detection. When a period in which an AP adjusts an output to enhance efficiency of wireless communication is shorter than a window length, signal similarity for each predetermined section may include a section 710 that continuously maintains a value greater than a predetermined threshold. When, during a predetermined observation time, signal similarity for each predetermined section remains consistently greater than a predetermined fourth threshold, an electronic device may determine that motion detection based on corresponding multipath channel state property information is unavailable. The fourth threshold may be determined experimentally and may include a value of 0.3 to 0.5, for example.

In addition, according to an embodiment, when multiple devices are connected to the AP and high-bandwidth Wi-Fi communication or response is required, the periodicity of multipath channel state property information transmitted from the AP to the electronic device may temporarily increase, leading to an increase in periodicity of the collection of multipath channel state property information for motion determination. In this case, due to the characteristics of calculation of signal similarity for each predetermined section, a pattern of signal similarity for each predetermined section that is unrelated to the absence or presence of actual motion may emerge. Accordingly, when an interval at which multipath channel state property information is received from the AP is greater than or equal to a threshold interval, the electronic device may determine that the AP is in an abnormal state and determine that motion detection is unavailable. For example, the threshold interval may be determined to be 1.5 times a reference interval of the multipath channel state property information received from the AP in a normal state, but embodiments are not limited thereto.

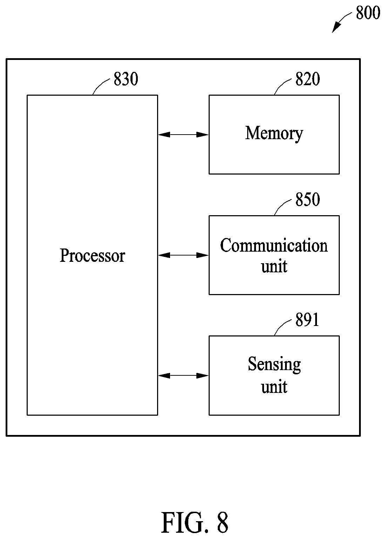

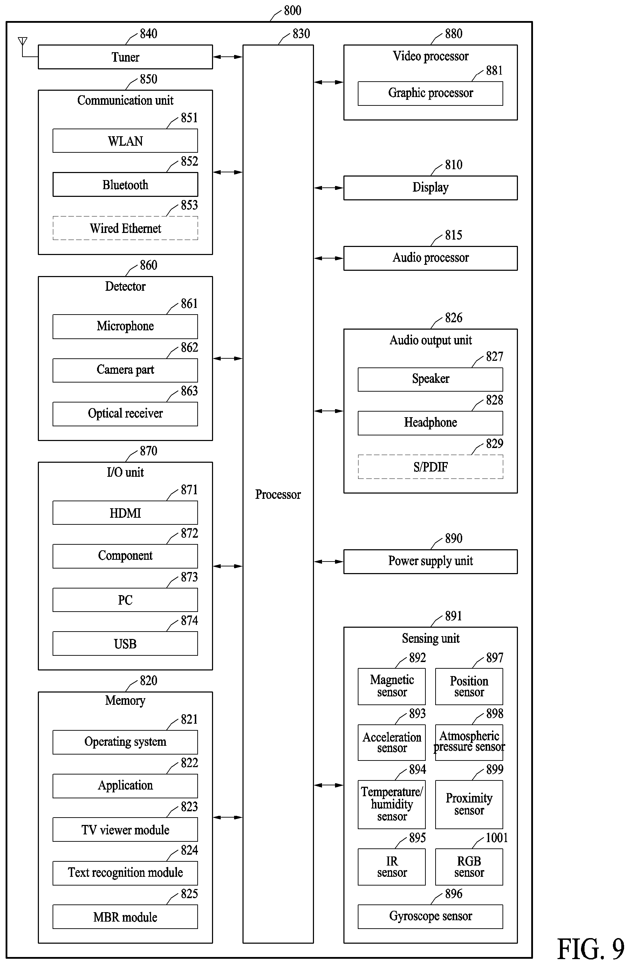

FIG. 8 is a block diagram of an electronic device according to an embodiment. FIG. 9 is a detailed block diagram of an electronic device according to an embodiment.

As illustrated in FIG. 8, an electronic device 800 according to an embodiment may include a memory 820, a processor 830, a communication unit 850, and a sensing unit 891. However, not all the illustrated components are essential components. The electronic device 800 may be implemented by more components than the illustrated components, and the electronic device 800 may be implemented by less components than the illustrated components.

For example, as illustrated in FIG. 9, the electronic device 800 according to an embodiment may further include a display 810, a tuner 840, a detector 860, an input/output (I/O) unit 870, a video processor 880, an audio processor 815, an audio output unit 826, and a power supply unit 890 as well as the memory 820, the processor 830, the communication unit 850, and the sensing unit 891.

Hereinafter, the components stated above are described.

The processor 830 may control the overall operation of the electronic device 800 and flow of a signal between internal components of the electronic device 800 and may process data. The processor 830 may execute various applications and an operation system (OS) stored in the memory 820, in response to a user input or when a preset and stored condition is satisfied.

The processor 830 may include a graphics processing unit (GPU) (not shown) to process a graphic corresponding to a video. The processor 830 may be implemented as a System on Chip (SoC) that integrates a core (not shown) and the GPU (not shown). The processor 830 may include a single core, a dual core, a triple core, a quad core, and a multi core.

Additionally, the processor 830 may include a plurality of processors. For example, the processor may be implemented as a main processor (not shown) and a sub-processor (not shown) that operates in a sleep mode.

According to an embodiment, the processor 830 may detect at least one sensed value corresponding to at least one sensor through the sensing unit 891 including at least one sensor, by executing one or more instructions stored in the memory 820.

In addition, according to an embodiment, the processor 830 execute the one or more instructions stored in the memory 820, thereby determining that a mobile device 1000 touches the electronic device 800 when it is determined the detected at least one sensed value is greater than or equal to a preset threshold.

In addition, according to an embodiment, the processor 830 may execute the one or more instructions stored in the memory 820, thereby determining that the mobile device 1000 touches the electronic device 800 through a comparison between the detected at least one sensed value and a sensed value of the mobile device received from the mobile device 1000.

In addition, according to an embodiment, the processor 830 may execute the one or more instructions stored in the memory 820, thereby requesting identification information of the mobile device 1000 and receiving the identification information of the mobile device 1000. Furthermore, the processor 830 may verify that the mobile device 1000 is a device pre-registered in the electronic device 800 based on the identification information of the mobile device 1000.

In addition, according to an embodiment, the processor 830, by executing the one or more instructions stored in the memory 820, based on at least one sensed value, may determine a touch region in which the mobile device 1000 touches the electronic device 800.

In addition, according to an embodiment, the processor 830, by executing the one or more instructions stored in the memory 820, may compare at least one sensed value detected corresponding to the at least one sensed value to another, and based on the comparison result, may determine one or more sensors that are determined to be proximate to a point where the mobile device 1000 touches the electronic device 800. Furthermore, the processor 830 may determine the touch region based on the determined one or more sensors.

In addition, according to an embodiment, the processor 830, through the communication unit 850, may receive, from the mobile device 1000, state information on an operation being executed by the mobile device 1000.

In addition, according to an embodiment, the processor 830, by executing the one or more instructions stored in the memory 820, based on the state information received from the mobile device 1000, may perform a preset function corresponding to the determined touch region.

In addition, according to an embodiment, the processor 830, by executing the one or more instructions stored in the memory 820, based on at least one sensed value, may determine the number of touches the mobile device 1000 makes on the electronic device 800.

In addition, according to an embodiment, the processor 830, by executing the one or more instructions stored in the memory 820, may perform a preset function corresponding to the number of touches.

In addition, according to an embodiment, the processor 830, by executing the one or more instructions stored in the memory 820, based on a user input, may preset a function corresponding to at least one touch region on the electronic device 800.

In addition, the processor 830, by executing the one or more instructions stored in the memory 820, based on a user input, may preset a function corresponding to the number of touches made on at least one touch region on the electronic device 800.

The memory 820 may store various pieces of data, a program, or an application for driving and controlling the electronic device 800 under the control of the processor 830. The memory 820 may store data or input/output signals corresponding to driving of the video processor 880, the display 810, the audio processor 815, the audio output unit 826, the power supply unit 890, the tuner 840, the communication unit 850, the detector 860, and the I/O unit 870.

The memory 820 may store an operating system 821 for controlling the electronic device 800 and the processor 830, an application 822 initially provided by a manufacturer or externally downloaded, a graphical user interface (GUI) related to an application, an object (e.g., image text, an icon, a button, etc.) for providing the GUI, user information, a document, databases, and relevant data.

In addition, the memory 820 may include a TV viewer module 823 including one or more instructions to receive an input signal from a remote control device (not shown) and thus perform channel control corresponding to the input signal, or enter a channel scroll user interface mode when the input signal corresponds to a preset input, a text recognition module 824 including one or more instructions to recognize information from content received from an external device (not shown), and a membrane bioreactor (MBR) module 825 including one or more instructions to control a channel from an external device (not shown).

The memory 820 may include read-only memory (ROM), random-access memory (RAM), a memory card (e.g., a micro secure digital (SD) card and a universal serial bus (USB) memory, which are not shown) mounted in the electronic device 800. In addition, the memory 820 may include a non-volatile memory, a volatile memory, a hard disk drive (HDD), or a solid state drive (SSD).

According to an embodiment, the memory 820 may include at least one type of storage media of a flash memory type, a hard disk type, a multimedia card micro type, a card memory type (e.g., SD or extreme digital (xD) memory), RAM, static RAM (SRAM), ROM, electrically erasable programmable ROM (EEPROM), programmable ROM (PROM), magnetic memory, a magnetic disk, and an optical disk.

The display 810 may display a video included in a broadcast signal received through the tuner 840 on a screen under the control of the processor 830. In addition, the display 810 may display content (e.g., a moving image) input through the communication unit 850 or the I/O unit 870. The display 810 may output an image stored in the memory 820 under the control of the processor 830.

The display 810 may generate a driving signal by converting an image signal, a data signal, an on-screen display (OSD) signal, and a control signal processed by the processor 830. The display 810 may be implemented as a plasma display panel (PDP), a liquid crystal display (LCD), an organic light-emitting diode (OLED) display, a cathode ray tube (CRT) display, a flexible display, and the like and may also be implemented as a three-dimensional (3D) display. In addition, the display 810 may be used as an input device as well as an output device by being configured as a touchscreen.

The tuner 840 may tune and select a frequency of a channel desired to be received by the electronic device 800 among various radio wave elements through performing amplification, mixing, resonance, and the like on a broadcast signal that is received by wire or wirelessly. The broadcast signal may include audio, a video, and additional information (e.g., an electronic program guide (EPG)).

The tuner 840 may receive the broadcast signal from a frequency band corresponding to a channel number according to a user input (e.g., a control signal received from a remote control device (not shown), that is, a channel number input, an up-down input of a channel, and a channel input on an EPG screen).

The tuner 840 may receive a broadcast signal from various sources, such as terrestrial broadcast, cable broadcast, satellite broadcast, and Internet broadcast. The tuner 840 may receive the broadcast signal from a source, such as analog broadcast or digital broadcast. The broadcast signal received by the tuner 840 may be separated into audio, video, and/or additional information by decoding (e.g., audio decoding, video decoding, or additional information decoding). The separated audio, video, and/or additional information may be stored in the memory 820 under the control of the processor 830.

One or a plurality of tuners 840 of the electronic device 800 may be provided. The tuner 840 may be implemented as all-in-one with the electronic device 800 or implemented as a separate device (e.g., a set-top box, which is not shown, and a tuner, which is not shown, connected to the I/O unit 870) that includes a tuner electrically connected to the electronic device 800.

The communication unit 850 may connect the electronic device 800 to an external device (e.g., an audio device, etc.) (not shown) under the control of the processor 830. The processor 830 may transmit/receive content to/from an external device (not shown) connected through the communication unit 850, may download an application from the external device (not shown), or may perform web browsing. The communication unit 850 may include one of a wireless local area network (WLAN) 851, Bluetooth 852, and wired Ethernet 153 corresponding to the performance and the structure of the electronic device 800. In addition, the communication unit 850 may include a combination of the WLAN 851, Bluetooth 852, and the wired Ethernet 153.

In addition, the communication unit 850 may receive a control signal of a remote control device (not shown) under the control of the processor 830. The control signal may be implemented as Bluetooth type, radio frequency (RF) signal type, or Wi-Fi type.

In addition, the communication unit 850 may further include another form of short-range communication (e.g., near field communication (NFC), which is not shown, and Bluetooth low energy (BLE), which is not shown) other than Bluetooth.

The detector 860 may detect voice, an image, or an interaction of a user and may include a microphone 861, a camera part 862, and an optical receiver 863.

The microphone 861 may receive an uttered voice of the user. The microphone 861 may convert the received voice into an electrical signal and may output the electrical signal to the processor 830. A user's voice may include, for example, a voice corresponding to a menu or a function of the electronic device 800.

The camera part 862 may obtain an image bezel, such as a still image or a moving image. An image captured by an image sensor may be processed by the processor 830 or a separate image processor (not shown).

The image bezel processed by the camera part 862 may be stored in the memory 820 or may be transmitted to the outside through the communication unit 850. Two or more camera parts 862 may be provided based on a configuration of the electronic device 800.

The optical receiver 863 may receive an optical signal (including a control signal) received from an external remote control device (not shown). The optical receiver 863 may receive an optical signal corresponding to a user input (e.g., a touch, a press, a touch gesture, a voice, or a motion) from a remote control device (not shown). A control signal may be extracted from the received optical signal under the control of the processor 830. For example, the optical receiver 863 may receive a control signal corresponding to a channel up/down button for changing a channel, from the remote control device (not shown).

The I/O unit 870 may receive a video (e.g., a moving image, etc.), audio (e.g., a voice, music, etc.), and additional information (e.g., an EPG, etc.) from the outside of the electronic device 800 under the control of the processor 830. The I/O unit 870 may include at least one of a high-definition multimedia interface (HDMI) port 871, a component jack 872, a personal computer (PC) port 873, and a USB port 874. The I/O unit 870 may include a combination of at least one of the HDMI port 871, the component jack 872, the PC port 873, and the USB port 874. An external image-providing device (not shown) may be connected through the HDMI port 871.

The video processor 880 may process video data received by the electronic device 800. In the video processor 880, various image processing may be performed on video data, such as decoding, scaling, noise filtering, bezel rate conversion, and resolution conversion.

A graphic processor 881 may generate a screen including various objects, such as an icon, an image, and text using an operator (not shown) and a renderer (not shown). The operator (not shown) may calculate an attribute value, such as a coordinates value, shape, size, and color to display each object based on the layout of a screen using a user input that is detected by the detector 860. The renderer (not shown) may generate screens in various layouts including an object based on the attribute value calculated by the operator (not shown). The screen generated by the renderer (not shown) may be displayed on a display area of the display 810.

The audio processor 815 may process audio data. The audio processor 815 may perform various processing on the audio data, such as decoding, amplification, and noise filtering. Meanwhile, the audio processor 815 may include a plurality of audio processing modules to process audio corresponding to a plurality of contents.

The audio output unit 826 may output audio included in the broadcast signal received through the tuner 840 under the control of the processor 830. The audio output unit 826 may output audio (e.g., a voice, a sound) input through the communication unit 850 or the I/O unit 870. In addition, the audio output unit 826 may output audio stored in the memory 820 under the control of the processor 830. The audio output unit 826 may include at least one of a speaker 827, a headphone output terminal 828, or a Sony/Philips digital interface (S/PDIF) output terminal 829. The audio output unit 826 may include a combination of at least one of the speaker 827, the headphone output terminal 828, and the S/PDIF output terminal 829.

The power supply unit 890 may supply power input from an external power source to the components inside the electronic device 800 under the control of the processor 830. In addition, the power supply unit 890 may supply power output from one or more batteries (not shown) in the electronic device 800 to the components inside the electronic device 800 under the control of the processor 830.

The sensing unit 891 may sense a state of the electronic device 800 or a state around the electronic device 800 and may provide the information obtained through the sensing to the processor 830.

The sensing unit 891 may include at least one of a magnetic sensor 892, an acceleration sensor 893, a temperature/humidity sensor 894, an infrared (IR) sensor 895, a gyroscope sensor 896, a position sensor (e.g., global positioning system (GPS)) 897, an atmospheric pressure sensor 898, a proximity sensor 899, and a red, green, blue (RGB) sensor (e.g., an illuminance sensor) 1001, however, embodiments are not limited thereto. A function of each sensor may be intuitively inferable from its name by one of ordinary skill in the art, and thus, a detailed description thereof is omitted herein.

According to an embodiment, the sensing unit 891 may sense an external impact on the electronic device 800. For example, when the mobile device 1000 touches the electronic device 800, the sensing unit 891 of the electronic device 800 may output a sensed value.

In addition, a separate external device (e.g., a set-top box, which is not shown) including the tuner 840 may be electrically connected to the electronic device 800 including the display 810.

In addition, the electronic device 800 may be implemented as an analog TV, a digital TV, a 3D-TV, a smart TV, an LED TV, an OLED TV, a plasma TV, and a monitor, however, one skilled in the art will understand that embodiments are not limited thereto.

Meanwhile, the illustrated block diagram of the electronic device 800 is a block diagram of an embodiment. Each component of the block diagram may be integrated, added, or omitted based on actually implemented specifications of the electronic device 800. That is, two or more components may be combined into one component, or one component may be divided into two or more components, as necessary. In addition, a function performed by each block is for describing embodiments, and a detailed operation thereof or a device does not limit the scope of the present disclosure.

According to an embodiment, the electronic device 800 may include the memory 820 including at least one executable instruction and the processor 830 for executing the at least one instruction stored in the memory 820, and the processor 830 may acquire multipath channel state property information based on a wireless signal received from an AP communicating with the electronic device, calculate signal similarity for each predetermined section based on the multipath channel state property information, and determine whether motion detection based on the multipath channel state property information is available based on a pattern of the signal similarity for each predetermined section.

According to an embodiment, the processor 830 of the electronic device 800 may determine that motion detection based on the multipath channel state property information is unavailable in response to it being determined that the pattern of the signal similarity for each predetermined section is not caused by motion of a user.

According to an embodiment, the processor 830 of the electronic device 800 may determine whether the motion detection is available based on the difference between the length of one of sections that remain greater than or equal to a threshold predetermined in the signal similarity for each predetermined section and the average length of the sections.

According to an embodiment, the processor 830 of the electronic device 800 may determine that the motion detection based on the multipath channel state property information is unavailable in response to a value based on the difference between the length of one of the sections that remain greater than or equal to the threshold predetermined in the signal similarity for each predetermined section and the average length of the sections being less than a second threshold.

According to an embodiment, the processor 830 of the electronic device 800 may determine whether the motion detection is available based on similarity between patterns of the sections that remain greater than or equal to the threshold predetermined in the signal similarity for each predetermined section.

According to an embodiment, the processor 830 of the electronic device 800 may determine whether the motion detection is available based on whether the length of one of the sections that remain greater than or equal to the threshold predetermined in the signal similarity for each predetermined section is less than a third threshold.

According to an embodiment, in the electronic device 800, the third threshold may be determined based on the minimum length of a section in which the signal similarity for each predetermined section remains greater than or equal to the threshold due to the motion of the user.

According to an embodiment, in the electronic device 800, the third threshold may be determined based on a window length for calculating the signal similarity for each predetermined section, the minimum time of the motion of the user that influences the signal similarity for each predetermined section, or the minimum detection time required to detect the motion of the user through a pattern.

According to an embodiment, the processor 830 of the electronic device 800 may determine whether the motion detection is available based on whether the length of a section that remains greater than or equal to a fourth threshold predetermined in the signal similarity for each predetermined section is greater than or equal to a fifth threshold.

According to an embodiment, the processor 830 of the electronic device 800 may determine whether the motion detection is available based on whether an interval at which the multipath channel state property information is received from the AP is greater than or equal to a threshold interval.

According to an embodiment, the processor 830 of the electronic device 800 may suspend the motion detection based on the multipath channel state property information received from the AP in response to it being determined that the motion detection based on the multipath channel state property information is unavailable.

According to an embodiment, the electronic device 800 may be one of a mobile phone, a smartphone, a PDA, a netbook, a tablet computer, a laptop computer, a mobile device, a smartwatch, a smart band, smart glasses, a wearable device, a desktop, a computing device, a TV, a set-top box, a refrigerator, a home appliance, a door lock, or a security device.

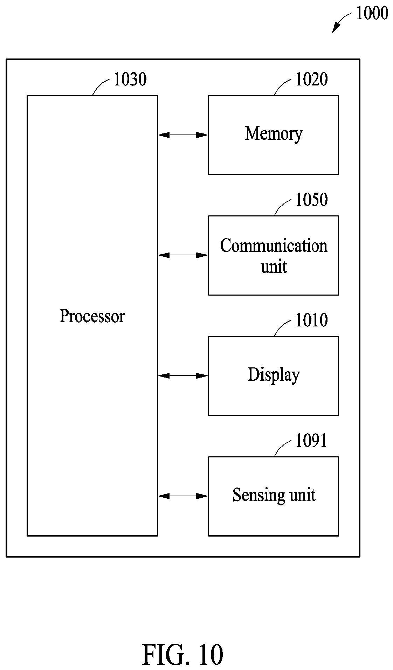

FIG. 10 is a block diagram of a mobile device according to an embodiment.

According to an embodiment, the mobile device 1000 may include at least some of the device components described with reference to FIGS. 8 and 9.

As illustrated in FIG. 10, the mobile device 1000 may include a display 1010, a memory 1020, a communication unit 1050, a sensing unit 1091, and a processor 1030. However, not all of the components illustrated in FIG. 10 are essential components of the mobile device 1000. The mobile device 1000 may be implemented by more components than the components illustrated in FIG. 10, and the mobile device 1000 may be implemented by less components than the components illustrated in FIG. 10.

According to an embodiment, the display 1010 of the mobile device 1000 may generate a driving signal by converting an image signal, a data signal, an OSD signal, a control signal, and the like processed by the processor 1030.

In addition, the display 1010 may display content (e.g., a moving image) input through the communication unit 1050 or an I/O unit (not shown). The display 1010 may output an image stored in the memory 1020 under the control of the processor 1030.

According to an embodiment, the memory 1020 of the mobile device 1000 may store a program for processing and controlling the processor 1030 and store data input to or output from the mobile device 1000.

Normally, the processor 1030 controls the overall operation of the mobile device 1000. For example, the processor 1030 may generally control the sensing unit 1091, the communication unit 1050, and the like by executing programs stored in the memory 1020. The processor 1030 may control an operation of the mobile device 1000 to perform functions of the mobile device 1000 described with reference to FIGS. 1 to 13.

The processor 1030 may include one or more processors. The one or more processors may include a general-purpose processor, such as a central processing unit (CPU), an application processor (AP), or a digital signal processor (DSP) or a graphic processor, such as a GPU or a vision processing unit (VPU). The one or more processors control input data to be processed according to a predefined operation rule stored in the memory.

According to an embodiment, the processor 1030 may receive a wireless signal transmitted by the electronic device 800 through the communication unit 1050.

In addition, the processor 1030 may receive a request for identification information of the mobile device from the electronic device 800 through the communication unit 1050. The processor 1030 may control to transmit the identification information of the mobile device to the electronic device 800 through the communication unit 1050.

In addition, the processor 1030 may control to transmit a sensing value detected by the sensing unit 1091 to the electronic device 800 through the communication unit 1050.

In addition, the processor 1030 may receive a request for state information on an operation running on the mobile device 1000 through the communication unit 1050. The processor 1030 may generate the state information on the currently running operation. The processor 1030 may control to transmit the state information on the currently running operation to the electronic device 800 through the communication unit 1050.

In addition, the memory 1020 may include at least one type of storage medium of a flash memory type memory, a hard disk type memory, a multimedia card micro type, a card type memory (e.g., an SD or xD memory, etc.), RAM, SRAM, ROM, EEPROM, PROM, a magnetic memory, a magnetic disk, or an optical disk.

In addition, according to an embodiment, the communication unit 1050 may include one or more components that allow the mobile device 1000 to communicate with an external device. For example, the communication unit 1050 may include a short-range wireless communication unit (not shown), a mobile communication unit (not shown), and a broadcast receiver (not shown).

The short-range wireless communication unit may include a Bluetooth communication unit, a BLE communication unit, an NFC unit, a WLAN (Wi-Fi) communication unit, a Zigbee communication unit, an infrared data association (IrDA) communication unit, a Wi-Fi direct (WFD) communication unit, an ultra-wideband (UWB) communication unit, and an Ant+ communication unit, but embodiments are not limited thereto.

The mobile communication unit transmits and receives a wireless signal to and from at least one of a base station, an external terminal, and a server on a mobile communication network. Here, the wireless signal may include various types of data according to the transmission and reception of a voice call signal, a video call signal, or a text/multimedia message.

The broadcast receiver receives a broadcast signal and/or broadcast-related information through a broadcast channel. The broadcast channel may include a satellite channel and a terrestrial channel. Depending on an implementation example, the mobile device 1000 may not include the broadcast receiver.

The sensing unit 1091 may sense a state of the mobile device 1000 or a state around the mobile device 1000 and provide the information obtained through the sensing to the processor 1030.

The sensing unit 1091 may include at least one of a magnetic sensor, an acceleration sensor, a temperature/humidity sensor, an IR sensor, a gyroscope sensor, a position sensor (e.g., a GPS), a light sensor, a proximity sensor, and an RGB sensor (e.g., an illuminance sensor), however, embodiments are not limited thereto. A function of each sensor may be intuitively inferable from its name by one of ordinary skill in the art, and thus, a detailed description thereof is omitted herein.

According to an embodiment, the sensing unit 1091 may detect an external impact applied to the mobile device 1000. According to an embodiment, the acceleration sensor embedded in the mobile device 1000 may detect an impact caused by a touch motion on the electronic device 800. Furthermore, the acceleration sensor embedded in the mobile device 1000 may sense the moving speed and acceleration of the mobile device 1000.

In addition, the display 1010, the memory 1020, the communication unit 1050, the sensing unit 1091, and the processor 1030 of the mobile device 1000 are described based on the description of the display 810, the memory 820, the communication unit 850, the sensing unit 891, and the processor 830 of the electronic device 800 provided with reference to FIGS. 8 and 9.

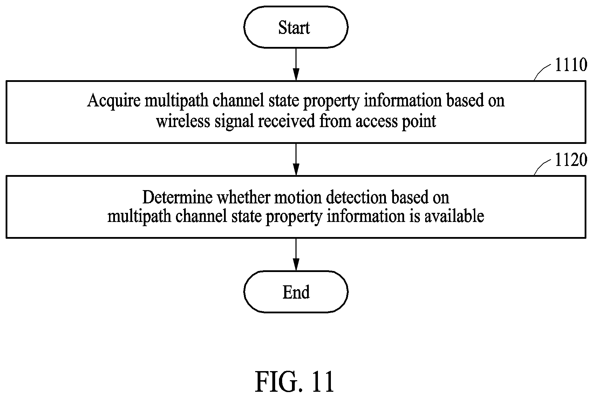

FIG. 11 is a diagram illustrating an operating method of an electronic device according to an embodiment.

In the following embodiments, operations may be performed sequentially but not necessarily. For example, the order of the operations may be changed, and at least two of the operations may be performed in parallel. Operations 1110 and 1120 may be performed by at least one of components of an electronic device.

In operation 1110, the electronic device may receive multipath channel state property information from an AP communicating with the electronic device.

In operation 1120, the electronic device may determine whether motion detection based on the multipath channel state property information is available based on whether it is determined that a pattern of signal similarity for each predetermined section determined based on the multipath channel state property information is caused by motion of a user. The electronic device may determine that the motion detection based on the multipath channel state property information is unavailable in response to it being determined that the pattern of the signal similarity for each predetermined section is not caused by the motion of the user.

The electronic device may suspend the motion detection based on the multipath channel state property information received from the AP in response to it being determined that the motion detection based on the multipath channel state property information is unavailable.

The descriptions provided with reference to FIGS. 1 to 10 apply to the operations illustrated in FIG. 11, and thus, further detailed descriptions thereof are omitted.

According to an embodiment, the operating method of the electronic device may include acquiring multipath channel state property information based on a wireless signal received from an AP communicating with the electronic device and determining whether the motion detection based on the multipath channel state property information is available based on whether a pattern of signal similarity for each predetermined section determined based on the multipath channel state property information is caused by the motion of the user.

According to an embodiment, in the operating method of the electronic device, the determining may include determining that the motion detection based on the multipath channel state property information is unavailable in response to it being determined that the pattern of the signal similarity for each predetermined section is not caused by the motion of the user.

According to an embodiment, in the operating method of the electronic device, the determining may include determining whether the motion detection is available based on the difference between the length of one of sections that remain greater than or equal to a threshold predetermined in the signal similarity for each predetermined section and the average length of the sections.

According to an embodiment, in the operating method of the electronic device, the determining may include determining that the motion detection based on the multipath channel state property information is unavailable in response to a value based on the difference between the length of one of the sections that remain greater than or equal to the threshold predetermined in the signal similarity for each predetermined section and the average length of the sections being less than a second threshold.

According to an embodiment, in the operating method of the electronic device, the determining may include determining whether the motion detection is available based on similarity between patterns of the sections that remain greater than or equal to the threshold predetermined in the signal similarity for each predetermined section.

According to an embodiment, in the operating method of the electronic device, the determining may include determining whether the motion detection is available based on whether the length of one of the sections that remain greater than or equal to the threshold predetermined in the signal similarity for each predetermined section is less than a third threshold.

According to an embodiment, in the operating method of the electronic device, the third threshold may be determined based on the minimum length of a section in which the signal similarity for each predetermined section remains greater than or equal to a threshold due to the motion of the user.

The embodiments disclosed in the specification and drawings are presented merely as an easy way to describe the technical contents of the embodiments and promote an understanding of the technical contents, and are not intended to limit the embodiments. Therefore, all changes or modifications derived from the technical idea of the various embodiments of the present disclosure as well as the various embodiments disclosed herein should be construed to fall within the scope of the various embodiments.

**Claims**

1. An electronic device comprising:

   a memory comprising at least one executable instruction; and
   a processor configured to execute at least one instruction stored in the memory,
   wherein the processor is configured to:

      acquire multipath channel state property information based on a wireless signal received from an access point (AP) communicating with the electronic device;
      calculate signal similarity for each predetermined section based on the multipath channel state property information; and
      determine, based on a pattern of the signal similarity for each predetermined section, whether motion detection based on the multipath channel state property information is available.

2. The electronic device of claim 1, wherein the processor is configured to, in response to it being determined that the pattern of the signal similarity for each predetermined section is not caused by motion of a user, determine that the motion detection based on the multipath channel state property information is unavailable.

3. The electronic device of claim 1, wherein the processor is configured to determine whether the motion detection is available based on a difference between a length of one of sections that remain greater than or equal to a threshold predetermined in the signal similarity for each predetermined section and an average length of the sections.

4. The electronic device of claim 3, wherein the processor is configured to, in response to a value based on the difference between the length of one of the sections that remain greater than or equal to the threshold predetermined in the signal similarity for each predetermined section being less than a second threshold, determine that the motion detection based on the multipath channel state property information is unavailable.

5. The electronic device of claim 1, wherein the processor is configured to determine whether the motion detection is available based on similarity between patterns of sections that remain greater than or equal to a threshold predetermined in the signal similarity for each predetermined section.

6. The electronic device of claim 1, wherein the processor is configured to determine whether the motion detection is available based on whether a length of one of sections that remain greater than or equal to a threshold predetermined in the signal similarity for each predetermined section is less than a third threshold.

7. The electronic device of claim 6, wherein the third threshold is determined based on a minimum length of a section in which the signal similarity for each predetermined section remains greater than or equal to the threshold due to motion of a user.

8. The electronic device of claim 6, wherein the third threshold is determined based on a window length for calculating the signal similarity for each predetermined section, a minimum duration of motion of a user that influences the signal similarity for each predetermined section, and a minimum detection time required to detect motion of a user through the signal similarity for each predetermined section.

9. The electronic device of claim 1, wherein the processor is configured to determine whether the motion detection is available based on whether a length of a section that remains greater than or equal to a fourth threshold predetermined in the signal similarity for each predetermined section is greater than or equal to a fifth threshold.

10. The electronic device of claim 1, wherein the processor is configured to determine whether the motion detection is available based on whether an interval at which the multipath channel state property information is received from the AP is greater than or equal to a threshold interval.

11. The electronic device of claim 1, wherein the processor is configured to, in response to it being determined that motion detection based on the multipath channel state property information is unavailable, suspend motion detection based on the multipath channel state property information received from the AP.

12. The electronic device of claim 1, wherein the electronic device is one of a mobile phone, a smartphone, a personal digital assistant (PDA), a netbook, a tablet computer, a laptop computer, a mobile device, a smartwatch, a smart band, smart glasses, a wearable device, a desktop, a computing device, a television, a set-top box, a refrigerator, an appliance, a door lock, or a security device.

13. An operating method of an electronic device, the operating method comprising:

    acquiring multipath channel state property information based on a wireless signal received from an access point (AP) communicating with the electronic device; and
    determining whether motion detection based on the multipath channel state property information is available based on a determination of whether a pattern of signal similarity for each predetermined section determined based on the multipath channel state property information is caused by motion of a user.

14. The operating method of claim 13, wherein the determining comprises, in response to it being determined that the pattern of the signal similarity for each predetermined section is not caused by the motion of the user, determining that the motion detection based on the multipath channel state property information is unavailable.

15. A computer-readable storage medium storing a program for executing the operating method of claim 13.

FIG. 1

Pattern of signal
similarity for each
predetermined
section

Actual motion duration
(e.g., three seconds)

T=$t_0$

T=$t_1$

T=$t_2$

T=$t_3$

T=$t_4$

T=$t_5$

T=$t_6$

T=$t_7$

Window length of signal
similarity for each
predetermined section
(e.g., four seconds)

t

FIG. 2

Pattern of signal
similarity for each
predetermined
section

| T_no_move_1 | T_move_1 | T_no_move_2 | T_move_2 | T_no_move_3 |

Max_1

Max_2

t

Min_1

Min_2

Min_3

T_observe

FIG. 3

Pattern of signal
similarity for each
predetermined
section

FIG. 4

Pattern of signal
similarity for each
predetermined
section

FIG. 5

Pattern of signal
similarity for each
predetermined
section

◎ AP output adjustment time point

t

Window length
of motion detection

## FIG. 6

Pattern of signal
similarity for each
predetermined
section

⊚ AP output adjustment time point

710

Window length
of motion detection

t

FIG. 7

800

830

Processor

820

Memory

850

Communication unit

891

Sensing unit

FIG. 8

FIG. 9

1000

1030

1020

Memory

1050

Communication
unit

Processor

1010

Display

1091

Sensing unit

FIG. 10

Start

1110

Acquire multipath channel state property information based on
wireless signal received from access point

1120

Determine whether motion detection based on
multipath channel state property information is available

End

FIG. 11

## INTERNATIONAL SEARCH REPORT

International application No.

**PCT/KR2022/010052**

### A. CLASSIFICATION OF SUBJECT MATTER

**H04B 17/309**(2014.01)i; **H04B 17/26**(2014.01)i; **H04B 7/06**(2006.01)i

According to International Patent Classification (IPC) or to both national classification and IPC

### B. FIELDS SEARCHED

Minimum documentation searched (classification system followed by classification symbols)

H04B 17/309(2014.01); G01S 13/00(2006.01); G01S 5/02(2010.01); G01S 7/292(2006.01); G01S 7/40(2006.01); G01S 7/41(2006.01); G06Q 50/22(2012.01); H04W 48/16(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 액세스 포인트(access point; AP), 멀티 패스 채널 상태 특성 정보(multi-pass channel state characteristic information), 유사도(similarity), 움직임 감지(motion detection)

### C. DOCUMENTS CONSIDERED TO BE RELEVANT

| Category* | Citation of document, with indication, where appropriate, of the relevant passages | Relevant to claim No. |
|---|---|---|
| X | US 2021-0173046 A1 (REGANI, Sai Deepika et al.) 10 June 2021 (2021-06-10)<br>See paragraphs [0153], [0194] and [0246]; claims 1, 6-9, 12 and 28; and figure 2. | 1-15 |
| A | US 2015-0245280 A1 (QUALCOMM INCORPORATED) 27 August 2015 (2015-08-27)<br>See paragraphs [0124]-[0127]; and figure 8. | 1-15 |
| A | KR 10-1667734 B1 (LG ELECTRONICS INC.) 19 October 2016 (2016-10-19)<br>See paragraphs [0118]-[0125]; and figure 3. | 1-15 |
| A | KR 10-2018-0087827 A (KOREA INSTITUTE OF SCIENCE AND TECHNOLOGY) 02 August 2018 (2018-08-02)<br>See paragraphs [0050]-[0090]; and figure 4. | 1-15 |
| A | KR 10-2021-0007238 A (SAMSUNG ELECTRONICS CO., LTD.) 20 January 2021 (2021-01-20)<br>See paragraphs [0130]-[0136]; and figure 10. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 October 2022** | **20 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center"><strong>INTERNATIONAL SEARCH REPORT</strong><br>Information on patent family members</td><td colspan="2">International application No.<br><br><strong>PCT/KR2022/010052</strong></td></tr>
</table>

| Patent document cited in search report | Publication date (day/month/year) | Patent family member(s) | Publication date (day/month/year) |
|---|---|---|---|
| US 2021-0173046 A1 | 10 June 2021 | CA 3092082 A1 | 25 July 2019 |
| | | CN 106664265 A | 10 May 2017 |
| | | CN 106664265 B | 01 May 2020 |
| | | CN 108700652 A | 23 October 2018 |
| | | CN 108778106 A | 09 November 2018 |
| | | CN 108778106 B | 07 September 2021 |
| | | CN 109073389 A | 21 December 2018 |
| | | EP 3033862 A1 | 22 June 2016 |
| | | EP 3195541 A2 | 26 July 2017 |
| | | EP 3195541 A4 | 30 August 2017 |
| | | EP 3195541 B1 | 03 November 2021 |
| | | EP 3387849 A1 | 17 October 2018 |
| | | EP 3387849 A4 | 27 November 2019 |
| | | EP 3426137 A1 | 16 January 2019 |
| | | EP 3426137 A4 | 18 March 2020 |
| | | EP 3426148 A1 | 16 January 2019 |
| | | EP 3426148 A4 | 09 October 2019 |
| | | EP 3443300 A1 | 20 February 2019 |
| | | EP 3443300 A4 | 09 October 2019 |
| | | EP 3492944 A1 | 05 June 2019 |
| | | EP 3492944 B1 | 05 May 2021 |
| | | EP 3492945 A1 | 05 June 2019 |
| | | EP 3492946 A1 | 05 June 2019 |
| | | EP 3492946 B1 | 12 May 2021 |
| | | EP 3695783 A1 | 19 August 2020 |
| | | EP 3739356 A1 | 18 November 2020 |
| | | EP 3869219 A1 | 25 August 2021 |
| | | EP 3879298 A2 | 15 September 2021 |
| | | EP 3879298 A3 | 08 December 2021 |
| | | JP 2017-531811 A | 26 October 2017 |
| | | JP 2019-111321 A | 11 July 2019 |
| | | JP 2019-130289 A | 08 August 2019 |
| | | JP 2019-133639 A | 08 August 2019 |
| | | JP 2019-179020 A | 17 October 2019 |
| | | JP 2019-506772 A | 07 March 2019 |
| | | JP 2019-512304 A | 16 May 2019 |
| | | JP 2019-515703 A | 13 June 2019 |
| | | JP 2020-065259 A | 23 April 2020 |
| | | JP 2020-128987 A | 27 August 2020 |
| | | JP 2020-144115 A | 10 September 2020 |
| | | JP 2020-203075 A | 24 December 2020 |
| | | JP 2022-028703 A | 16 February 2022 |
| | | JP 6623298 B2 | 18 December 2019 |
| | | JP 6688791 B2 | 28 April 2020 |
| | | JP 6900390 B2 | 07 July 2021 |
| | | JP 6931790 B2 | 08 September 2021 |
| | | JP 6971254 B2 | 24 November 2021 |
| | | TW 201521479 A | 01 June 2015 |
| | | US 10006246 B2 | 26 June 2018 |
| | | US 10009148 B1 | 26 June 2018 |

Form PCT/ISA/210 (patent family annex) (July 2022)

EP 4 358 439 A1

INTERNATIONAL SEARCH REPORT
Information on patent family members

International application No.

**PCT/KR2022/010052**

| Patent document cited in search report | Publication date (day/month/year) | Patent family member(s) | | | Publication date (day/month/year) |
|---|---|---|---|---|---|
| | | US | 10014982 | B1 | 03 July 2018 |
| | | US | 10129862 | B1 | 13 November 2018 |
| | | US | 10168414 | B2 | 01 January 2019 |
| | | US | 10270642 | B2 | 23 April 2019 |
| | | US | 10291460 | B2 | 14 May 2019 |
| | | US | 10327213 | B1 | 18 June 2019 |
| | | US | 10374863 | B2 | 06 August 2019 |
| | | US | 10380881 | B2 | 13 August 2019 |
| | | US | 10397039 | B2 | 27 August 2019 |
| | | US | 10440705 | B2 | 08 October 2019 |
| | | US | 10447094 | B2 | 15 October 2019 |
| | | US | 10476730 | B2 | 12 November 2019 |
| | | US | 10487544 | B2 | 26 November 2019 |
| | | US | 10495725 | B2 | 03 December 2019 |
| | | US | 10609711 | B1 | 31 March 2020 |
| | | US | 10735298 | B2 | 04 August 2020 |
| | | US | 10742475 | B2 | 11 August 2020 |
| | | US | 10833912 | B2 | 10 November 2020 |
| | | US | 10845463 | B2 | 24 November 2020 |
| | | US | 10866302 | B2 | 15 December 2020 |
| | | US | 10948609 | B1 | 16 March 2021 |
| | | US | 11012285 | B2 | 18 May 2021 |
| | | US | 11025475 | B2 | 01 June 2021 |
| | | US | 11035940 | B2 | 15 June 2021 |
| | | US | 11181486 | B2 | 23 November 2021 |
| | | US | 2010-0075286 | A1 | 25 March 2010 |
| | | US | 2015-0033628 | A1 | 05 February 2015 |
| | | US | 2015-0033629 | A1 | 05 February 2015 |
| | | US | 2015-0049745 | A1 | 19 February 2015 |
| | | US | 2015-0049792 | A1 | 19 February 2015 |
| | | US | 2015-0236848 | A1 | 20 August 2015 |
| | | US | 2015-0257167 | A1 | 10 September 2015 |
| | | US | 2015-0312081 | A1 | 29 October 2015 |
| | | US | 2016-0018508 | A1 | 21 January 2016 |
| | | US | 2016-0021670 | A1 | 21 January 2016 |
| | | US | 2016-0081060 | A1 | 17 March 2016 |
| | | US | 2016-0164669 | A1 | 09 June 2016 |
| | | US | 2016-0164767 | A1 | 09 June 2016 |
| | | US | 2016-0205569 | A1 | 14 July 2016 |
| | | US | 2016-0315797 | A1 | 27 October 2016 |
| | | US | 2016-0316454 | A1 | 27 October 2016 |
| | | US | 2017-0188359 | A1 | 29 June 2017 |
| | | US | 2017-0212210 | A1 | 27 July 2017 |
| | | US | 2018-0026481 | A1 | 25 January 2018 |
| | | US | 2018-0131554 | A1 | 10 May 2018 |
| | | US | 2018-0183650 | A1 | 28 June 2018 |
| | | US | 2018-0351775 | A1 | 06 December 2018 |
| | | US | 2018-0365975 | A1 | 20 December 2018 |
| | | US | 2019-0007256 | A1 | 03 January 2019 |
| | | US | 2019-0020530 | A1 | 17 January 2019 |

Form PCT/ISA/210 (patent family annex) (July 2022)

**INTERNATIONAL SEARCH REPORT**
Information on patent family members

International application No.

**PCT/KR2022/010052**

| Patent document cited in search report | Publication date (day/month/year) | Patent family member(s) | | | Publication date (day/month/year) |
|---|---|---|---|---|---|
| | | US | 2019-0028320 | A1 | 24 January 2019 |
| | | US | 2019-0097865 | A1 | 28 March 2019 |
| | | US | 2019-0158340 | A1 | 23 May 2019 |
| | | US | 2019-0166030 | A1 | 30 May 2019 |
| | | US | 2019-0178980 | A1 | 13 June 2019 |
| | | US | 2019-0218824 | A1 | 18 July 2019 |
| | | US | 2019-0327124 | A1 | 24 October 2019 |
| | | US | 2020-0064444 | A1 | 27 February 2020 |
| | | US | 2020-0064456 | A1 | 27 February 2020 |
| | | US | 2020-0182995 | A1 | 11 June 2020 |
| | | US | 2020-0191913 | A1 | 18 June 2020 |
| | | US | 2020-0191943 | A1 | 18 June 2020 |
| | | US | 2020-0202117 | A1 | 25 June 2020 |
| | | US | 2020-0240175 | A1 | 30 July 2020 |
| | | US | 2020-0271747 | A1 | 27 August 2020 |
| | | US | 2020-0271749 | A1 | 27 August 2020 |
| | | US | 2020-0300972 | A1 | 24 September 2020 |
| | | US | 2020-0302187 | A1 | 24 September 2020 |
| | | US | 2020-0319324 | A1 | 08 October 2020 |
| | | US | 2020-0322868 | A1 | 08 October 2020 |
| | | US | 2020-0366386 | A1 | 19 November 2020 |
| | | US | 2020-0397365 | A1 | 24 December 2020 |
| | | US | 2020-0405223 | A1 | 31 December 2020 |
| | | US | 2020-0406860 | A1 | 31 December 2020 |
| | | US | 2020-0408875 | A1 | 31 December 2020 |
| | | US | 2021-0091866 | A1 | 25 March 2021 |
| | | US | 2021-0136515 | A1 | 06 May 2021 |
| | | US | 2021-0136681 | A1 | 06 May 2021 |
| | | US | 2021-0173045 | A1 | 10 June 2021 |
| | | US | 2021-0190702 | A1 | 24 June 2021 |
| | | US | 2021-0190972 | A1 | 24 June 2021 |
| | | US | 2021-0215788 | A1 | 15 July 2021 |
| | | US | 2021-0215789 | A1 | 15 July 2021 |
| | | US | 2021-0232235 | A1 | 29 July 2021 |
| | | US | 8075316 | B2 | 13 December 2011 |
| | | US | 9226304 | B2 | 29 December 2015 |
| | | US | 9313020 | B2 | 12 April 2016 |
| | | US | 9402245 | B2 | 26 July 2016 |
| | | US | 9407306 | B2 | 02 August 2016 |
| | | US | 9559874 | B2 | 31 January 2017 |
| | | US | 9686054 | B2 | 20 June 2017 |
| | | US | 9736002 | B2 | 15 August 2017 |
| | | US | 9781700 | B2 | 03 October 2017 |
| | | US | 9794156 | B2 | 17 October 2017 |
| | | US | 9825838 | B2 | 21 November 2017 |
| | | US | 9882675 | B2 | 30 January 2018 |
| | | US | 9883511 | B1 | 30 January 2018 |
| | | US | 9887864 | B1 | 06 February 2018 |
| | | US | 9900794 | B2 | 20 February 2018 |
| | | WO | 2015-023895 | A1 | 19 February 2015 |

Form PCT/ISA/210 (patent family annex) (July 2022)

**INTERNATIONAL SEARCH REPORT**
Information on patent family members

International application No.

**PCT/KR2022/010052**

| Patent document cited in search report | | | Publication date (day/month/year) | Patent family member(s) | | | Publication date (day/month/year) |
|---|---|---|---|---|---|---|---|
| | | | | WO | 2016-011433 | A2 | 21 January 2016 |
| | | | | WO | 2016-011433 | A3 | 24 March 2016 |
| | | | | WO | 2017-100706 | A1 | 15 June 2017 |
| | | | | WO | 2017-155634 | A1 | 14 September 2017 |
| | | | | WO | 2017-156487 | A1 | 14 September 2017 |
| | | | | WO | 2017-156492 | A1 | 14 September 2017 |
| | | | | WO | 2017-180698 | A1 | 19 October 2017 |
| | | | | WO | 2019-143599 | A1 | 25 July 2019 |
| US | 2015-0245280 | A1 | 27 August 2015 | US | 9351224 | B2 | 24 May 2016 |
| KR | 10-1667734 | B1 | 19 October 2016 | | None | | |
| KR | 10-2018-0087827 | A | 02 August 2018 | CN | 110463294 | A | 15 November 2019 |
| | | | | CN | 110463294 | B | 30 March 2021 |
| | | | | EP | 3557919 | A2 | 23 October 2019 |
| | | | | EP | 3557919 | A4 | 05 August 2020 |
| | | | | JP | 2020-516859 | A | 11 June 2020 |
| | | | | JP | 6906617 | B2 | 21 July 2021 |
| | | | | KR | 10-1954676 | B1 | 06 March 2019 |
| | | | | KR | 10-1954677 | B1 | 06 March 2019 |
| | | | | KR | 10-2018-0087814 | A | 02 August 2018 |
| | | | | KR | 10-2018-0087818 | A | 02 August 2018 |
| | | | | KR | 10-2018-0087819 | A | 02 August 2018 |
| | | | | KR | 10-2018-0087837 | A | 02 August 2018 |
| | | | | KR | 10-2110813 | B1 | 13 May 2020 |
| | | | | US | 10746847 | B2 | 18 August 2020 |
| | | | | US | 11275163 | B2 | 15 March 2022 |
| | | | | US | 2019-0369205 | A1 | 05 December 2019 |
| | | | | US | 2019-0383922 | A1 | 19 December 2019 |
| | | | | US | 2020-0033463 | A1 | 30 January 2020 |
| | | | | WO | 2018-139771 | A2 | 02 August 2018 |
| | | | | WO | 2018-139771 | A3 | 27 September 2018 |
| | | | | WO | 2018-139772 | A2 | 02 August 2018 |
| | | | | WO | 2018-139772 | A3 | 27 September 2018 |
| | | | | WO | 2018-139773 | A1 | 02 August 2018 |
| KR | 10-2021-0007238 | A | 20 January 2021 | EP | 3966588 | A1 | 16 March 2022 |
| | | | | US | 11297464 | B2 | 05 April 2022 |
| | | | | US | 2021-0014641 | A1 | 14 January 2021 |
| | | | | WO | 2021-006706 | A1 | 14 January 2021 |

Form PCT/ISA/210 (patent family annex) (July 2022)